# EUROPEAN PATENT APPLICATION

(11) **EP 3 522 123 A1**
(43) Date of publication of application: **07.08.2019**
(21) Application number: 19155029.2
(22) Date of filing: 01.02.2019
(51) Int. Cl.: G07C 9/00, G08B 13/196

(54) **ROOM CAMERA ACCESS CONTROL BY KEYCARD AND TRACKING GUEST ACCESSORIES**

(30) Priority: 03.02.2018 IN 201811004129
(71) Applicant: Carrier Corporation, Palm Beach Gardens, FL 33418 (US); UTC Fire & Security India Ltd., Mumbai 400070 (IN)
(72) Inventor: MUKUNDALA, Sumanth Kumar, 500081 Telangana (IN); KUENZI, Adam, Salem, OR Oregon 97302-1142 (US)
(74) Representative: Dehns

(57) **Abstract**

A computer-implemented method for detecting a user accessing a room by a camera communicatively coupled to a lock mechanism of an entry way of a room is provided. The computer-implemented method includes receiving, by the camera, an access signal from the lock mechanism. The access signal indicates that the user is entering the room via the entry way. The computer-implemented method includes automatically capturing, by the camera, at least one image of a predefined area corresponding to the entry way of the room.

## Description

### BACKGROUND

Conventional hotel systems utilize electronic lock audits and card identification to track who opened a guest room door. Electronic lock audits and card identification are inherently unreliable. For instance, if a Person-A card is use by Person-B to access a guest room door, the lock audit indicates that Person-A opened that guest room door, while in fact it was Person-B. Due to this inherent unreliability, conventional hotel systems fail to provide full protection for items that can be stolen from a guest room. In turn, there is a need for a tracking mechanism to verify who accesses guest rooms.

### BRIEF DESCRIPTION

In accordance with one or more embodiments, a computer-implemented method for detecting a user accessing a room by one or more cameras communicatively coupled to a lock mechanism of an entry way of a room is provided. The computer-implemented method includes receiving, by a first camera of the one or more cameras, an access signal from the lock mechanism, the access signal indicating that the user is entering the room via the entry way; and automatically capturing, by the first camera, at least one image of a predefined area corresponding to the entry way of the room.

In accordance with one or more embodiments or the above computer-implemented method embodiment, the lock mechanism can generate the access signal in response to detecting a mobile device with a key application thereon or an access card.

In accordance with one or more embodiments or any of the above computer-implemented method embodiments, the mobile device with the key application thereon or the access card can be registered to the user, and the user may be a person other than a registered guest of the room.

In accordance with one or more embodiments or any of the above computer-implemented method embodiments, the first camera can be fixed inside the room, opposite to the entry way to orient the entry way and a space viewable through the entry way within a field of view of the first camera.

In accordance with one or more embodiments or any of the above computer-implemented method embodiments, the first camera can include a battery that provides power to the first camera, and the first camera can operate in a low power mode until the access signal is received.

In accordance with one or more embodiments or any of the above computer-implemented method embodiments, the first camera can activate in response to the access signal and remain active until a closed signal is received from the lock mechanism by the first camera.

In accordance with one or more embodiments or any of the above computer-implemented method embodiments, the automatic capture of the at least one image can include recording a video of the predefined area while the entry way is in an open state defined by a time period between receiving the access signal and the closed signal.

In accordance with one or more embodiments or any of the above computer-implemented method embodiments, the automatic capture of the at least one image can include a video of the predefined area for a time period.

In accordance with one or more embodiments or any of the above computer-implemented method embodiments, the first camera can include a memory and a processor, and the memory can store processor executable code for obfuscating portions of the at least one image external to the entry way and presenting portions of the at least one image within the entry way.

In accordance with one or more embodiments or any of the above computer-implemented method embodiments, the first camera can include a memory that stores the at least one image, and the at least one image can be accessible by a mobile device of a second user during a time period.

In accordance with one or more embodiments, a detection system including one or more cameras communicatively coupled to a lock mechanism of an entry way of a room is provided. A first camera of the one or more cameras include a memory and a processor. The memory stores processor executable code executable by the processor to cause receiving, by the first camera, an access signal from the lock mechanism, the access signal indicating that the user is entering the room via the entry way; and automatically capturing, by the first camera, at least one image of a predefined area corresponding to the entry way of the room.

In accordance with one or more embodiments or the above detection system embodiment, the lock mechanism can generate the access signal in response to detecting a mobile device with a key application thereon or an access card.

In accordance with one or more embodiments or any of the above detection system embodiments, the mobile device with the key application thereon or the access card is registered to the user, and wherein the user is a person other than a registered guest of the room.

In accordance with one or more embodiments or any of the above detection system embodiments, the first camera can be fixed inside the room, opposite to the entry way to orient the entry way and a space viewable through the entry way within a field of view of the first camera.

In accordance with one or more embodiments or any of the above detection system embodiments, the first camera can include a battery that provides power to the first camera, and the first camera can operate in a low power mode until the access signal is received.

In accordance with one or more embodiments or any of the above detection system embodiments, the first camera can activate in response to the access signal and remains active until a closed signal is received from the lock mechanism by the first camera.

In accordance with one or more embodiments or any of the above detection system embodiments, the automatic capture of the at least one image can include recording a video of the predefined area while the entry way is in an open state defined by a time period between receiving the access signal and the closed signal.

In accordance with one or more embodiments or any of the above detection system embodiments, the automatic capture of the at least one image can include recording a video of the predefined area for a time period.

In accordance with one or more embodiments or any of the above detection system embodiments, the processor executable code can be executable by the processor to cause the first camera to obfuscate portions of the at least one image external to the entry way and present portions of the at least one image within the entry way.

In accordance with one or more embodiments or any of the above detection system embodiments, the memory can store the at least one image, and the at least one image can be accessible by a mobile device of a second user during a time period.

### BRIEF DESCRIPTION OF THE DRAWINGS

The following descriptions should not be considered limiting in any way. With reference to the accompanying drawings, like elements are numbered alike:
FIG. 1 depicts a detection system according to one or more embodiments;
FIG. 2 depicts a process flow of a detection system according to one or more embodiments;
FIG. 3 depicts a detection system according to one or more embodiments; and
FIG. 4 depicts a process flow of a detection system according to one or more embodiments.

### DETAILED DESCRIPTION

A detailed description of one or more embodiments of the disclosed apparatus and method are presented herein by way of exemplification and not limitation with reference to the Figures.

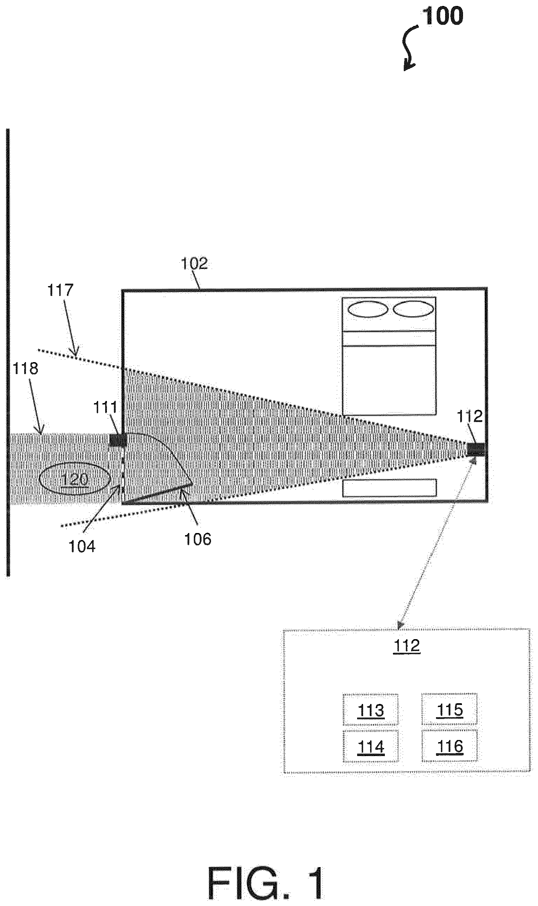

In accordance with one or more embodiments, a detection system comprises one or more cameras placed with respect to a room, where at least a first camera of the one or more cameras is opposite to an entry way and activates when a person enters the room utilizing an access card. The detection system can be implemented as a method, computer program product, and/or a device, and is further described herein with respect to, but not limited thereto, a hotel desk example. For instance, the detection system herein can be applied to commercial domains (e.g., vault access to a bank or datacenter access) and/or educational domains (e.g., class room access). The detection system will now be described with respect to FIGS. 1-2.

FIG. 1 depicts a detection system 100 according to one or more embodiments. The detection system 100 can be implemented at a room 102 (e.g., a hotel room) including at least one entry way 104, which may have a door 106. The detection system 100 includes a lock mechanism 111 and a computer 112. The computer 112 can include a processor 113, a memory 114, a transceiver 115, and a detection mechanism 116. The detection mechanism 116 includes a field of view 117. In accordance with one or more embodiments, the computer 112 can be fixed inside the room 102, opposite to the entry way 104 to orient the entry way 104 and a space 118 viewable through the entry way 104 within the field of view 117.

In general, the detection system 100 is an example and is not intended to suggest any limitation as to the scope of use or operability of embodiments described herein (indeed additional or alternative components and/or implementations may be used). Further, while single items are illustrated for items of the detection system 100, these representations are not intended to be limiting and thus, any item may represent a plurality of items. In accordance with one or more embodiments, the detection system 100 operates to record images of a user 120 as they access the entry way 104 and/or move about the room 102.

The locking mechanism 111 is a locking device which operates by means of electric current and includes an electronic control assembly mounted directly to a lock of the entry way 104 and/or the door 106. The locking mechanism 111 is communicatively connected to the computer 112 to provide one or more signals indicating locking mechanism activity. The locking mechanism 111 may also be communicatively connected to an access control system that provides key control (e.g., add and remove keys per user with respect to time and place factors) and access control and logging (e.g., the locking mechanism activity is remotely monitored and controlled).

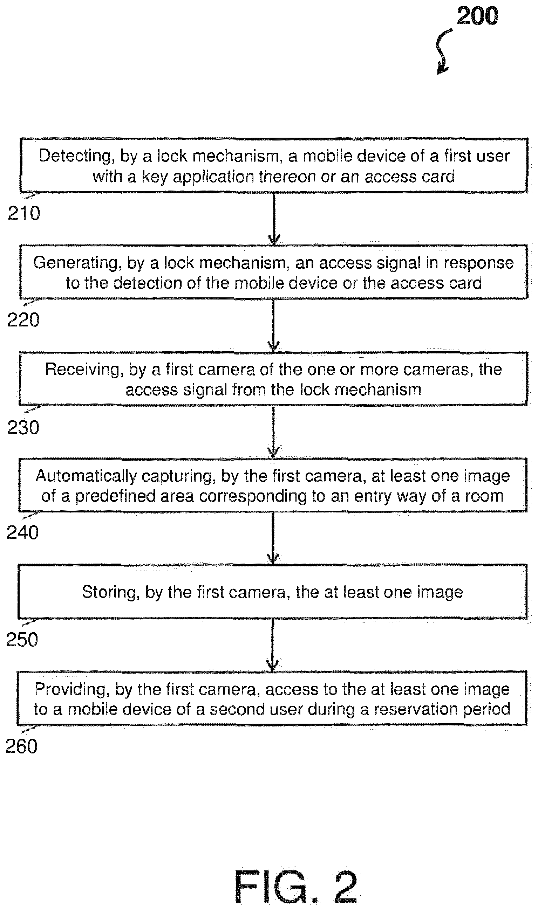

The computer 112 can include any processing hardware, software, or combination of hardware and software utilized by the detection system 100 to carry out computer readable program instructions by performing arithmetical, logical, and/or input/output operations. The processor 113 can comprise one or more central processing units (CPU(s)), also referred to as processing circuits, coupled via a system bus to the memory 114 and various other components (e.g., the detection mechanism 116). The memory 114 can include a read only memory (ROM) and a random access memory (RAM). The memory 114 stores program instructions (software and/or firmware) that are executable by the processor 113 to cause the operation described herein (e.g., FIG. 2, process flow 200). For example, the program instructions can include video editing software obfuscating portions of the at least one image external to the entry way 104 and presenting portions of the at least one image within the entry way 104 (e.g., anything inside the room is edited out to protect guest privacy in the room 102) In accordance with one or more embodiments, because recording an interior of the room 102 can be undesirable (to protect the privacy of the room 102), the computer 112 is configured to record only who came/went from the room 102. In this regards, the field of view 117 can be defined as a pyramid with a point of the pyramid beginning at the detection mechanism 116. A portion of an interior of the pyramid can be defined as obfuscated. For example the part of the pyramid closest to the sensor can be obfuscated by indicating the depth/distance from the detection mechanism 116 that is viewable (e.g., changing a focus of a camera certain portions of the field of view 117 are in focus). Alternatively, the obfuscated area can be defined as a slice of the pyramid where one whole portion of the field of view is obfuscated, for example, only the view of the entry way 104 is recorded whereas every other portion within view of the detection mechanism 116 is obfuscated. The obfuscation can be done via physical modifications to the detection mechanism 116 (e.g., by changing an aperture on a camera) or by image processing techniques where the image is modified by the computer 112 after being captured to artificially obfuscate the areas that are non-recording.

The transceiver 115 is a communications and/or interface adapter that can utilize any wired and/or wireless connection to receive and send one or more signals. Examples of wireless communication architectures include Bluetooth, Wi-Fi, ZigBee, etc. In accordance with one or more embodiments, the transceiver 115 operates to receive one or more signals communicated by the locking mechanism 111. In accordance with one or more embodiments, the transceiver 115 can include built-in Bluetooth chips that advertise and communicate when room-door is opened and closed.

The detection mechanism 116 of the detection system 100 can be an electromechanical component that images the field of view 117 (e.g., an optical device or a camera) based on one or more signals communicated by the locking mechanism 111 and received by the transceiver 115. In this regard, the detection mechanism 116 can utilize software and/or firmware of the memory 114 to carry out operations particular thereto (e.g., singularly or continuously imaging the user 120). In accordance with one or more embodiments, the computer 112 can be inside the room 102, opposite to the entry way 104 (to orient the entry way 104 and a space 118 viewable through the entry way 104 within the field of view 117).

FIG. 2 depicts a process flow 200 of the detection system 100 according to one or more embodiments. The process flow 200 is described with respect to hotel desk example noted herein, but is not limited thereto. Regarding the hotel desk example, one or more users utilize an access mechanism (e.g., a mobile device with a key application thereon or an access card) to engage one or more locking mechanisms for each room of the hotel. With respect to FIG. 1, each access mechanism is associated and designated for a particular user (registered to the user). That is, each access mechanism distinguishes between a registered guest of the hotel, housekeeping personnel, a maintenance worker, technician, etc. However, because the access mechanism can be passed or given to another user, the technical effects and benefits of the detection system 100 is to determine that who is utilizing the access mechanism at the locking mechanism 111.

The process flow 200 begins at block 210, where the lock mechanism 111 detects the access mechanism. The access mechanism, in this example, is a mobile device with a key application thereon or an access card of a first user (e.g., the user 120). The first user is a housekeeper (a person other than a registered guest of the room). The mobile device of the first user can be a smartphone, a tablet computer, a laptop computer, a personal digital assistant, etc.

At block 220, the lock mechanism 111 generates an access signal in response to the detection of the mobile device or the access card. The access signal indicates that the first user is entering the room 102 via the entry way 104.

At block 230, the computer 112 receives the access signal from the lock mechanism 111. The computer 112 can be considered a first camera of one or more cameras of the detection system 100. The receipt of the access signal from the lock mechanism 111 is a triggering event that causes the computer 112 to power on (the first camera is remote from the lock mechanism 111 and triggered by the open door 106).

In accordance with one or more embodiments, the first camera can include a battery that provides power with respect to a low power mode until the access signal is received and with respect to a normal power mode while the computer 112 is operating. For example, the first camera is battery powered and because it does not need to be on until a Bluetooth low energy signal (the access signal) from the lock mechanism 111 indicates to the first camera to be on. In addition, the first camera can activate in response to the access signal and remain active until a subsequent Bluetooth low energy signal (a closed signal) is received from the lock mechanism 111 by the first camera. The closed signal indicates that the door 106 is closed and/or the first user has left the room 102 via the entry way 104.

At block 240, the computer 112 automatically captures at least one image of a predefined area corresponding to the entry way 104 of the room 102. The predefined area can correspond to the field of view 117 and, more particularly, to the space 118. The automatic capture of the at least one image can include recording a picture or video of the predefined area for a time period or while the entry way 104 is in an open state defined by a time period between receiving the access signal and the closed signal. For example, the first camera can be active only when a room-door is opened, otherwise the first camera can be in disabled mode. Further, the first camera can be configured to take a short video after activation, where the length of the video is selected from a range of 1 second to 15 seconds. In accordance with one or more embodiments, if a camera is located outside the room 102, the camera can record based on motion and may record before the person accesses the lock 111. In this regard, a pre-recorded video can also be used to identify who is walking up to the lock.

At block 250, the computer 112 stores the at least one image. In accordance with one or more embodiments, the first camera (e.g., the computer 112) can include a memory that stores the at least one image in the memory 114.

At block 260, the computer 112 provides access to the at least one image to a mobile device of a second user (e.g., a registered guest) during a time or reservation period. The mobile device of the second user can be a smartphone, a tablet computer, a laptop computer, a personal digital assistant, etc. In accordance with one or more embodiments, the mobile device of the second user can include an application for connecting to the computer 112. The application includes a user interface that provides features to the user, such a viewing feature. In this way, the second user can utilize the viewing feature to watch the at least one image to determine if housekeeping serviced their room and, more particularly, determine who serviced their room (e.g., guest can view video clips from their phone while they have their room reservation). In addition, the computer 112 and application can provide an enable/disable mechanism to turn the automatic capturing of the at least one image on or off. In this way, the second user (or any authorized user) can be optionally enabled/disabled the computer 112 for privacy. Note that the detection system 100 can be configured such that, when the second user (e.g., a registered guest) opens the door 106, the computer 112 doesn't take a picture or video. In this way, when someone else opens the door 106, the computer 112 takes a picture or video. Also, note that the detection system 100 can be configured to reset the preferences when a new guest enters the room 102. Additionally, all prior recordings can be deleted so that a subsequent guest cannot see video from a prior guest.

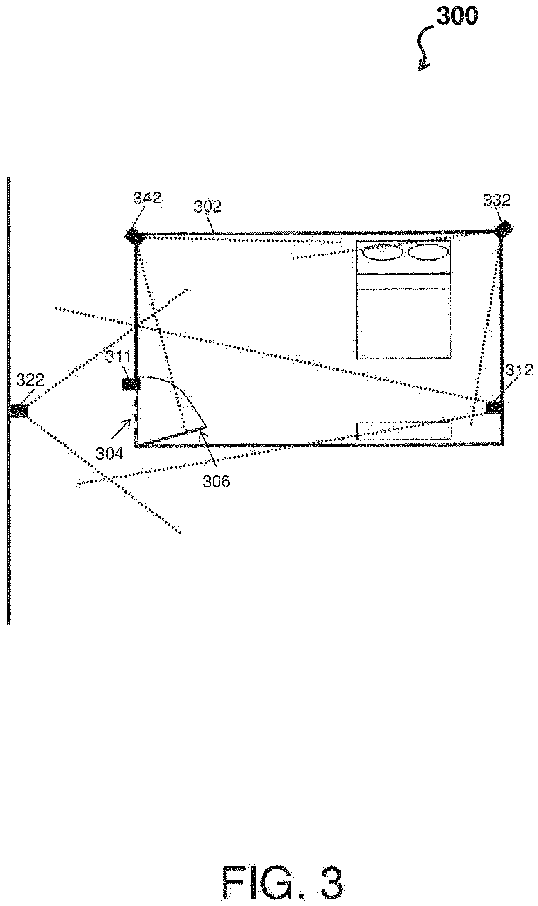

Turning now to FIG. 3-4, the detection systems herein will now be further described. FIG. 3 depicts a detection system 300 according to one or more embodiments. The detection system 300 can be implemented at a room 302 (e.g., a hotel room) including at least one entry way 304, which may have a door 306. The detection system 300 includes a lock mechanism 311 and one or more computers 312, 322, 332, and 342, each of which can comprise a processor 113, a memory 114, a transceiver 115, and a detection mechanism 116 as described herein with respect to FIG. 1. Further, each of the one or more computers 312, 322, 332, and 342 includes a field of view represented by the dotted-lines extending from those devices.

In general, the detection system 100 is an example and is not intended to suggest any limitation as to the scope of use or operability of embodiments described herein (indeed additional or alternative components and/or implementations may be used). Further, while single items are illustrated for items of the detection system 100, these representations are not intended to be limiting and thus, any item may represent a plurality of items.

In accordance with one or more embodiments, the detection system 300 operates to record images of a user 320 as the access the entry way 304 and/or move about the room 302. For instance, the computer 312 can be fixed inside the room 302, opposite to the entry way 304 to record the entry way 304 and an exterior room space viewable through the entry way 304. The computer 322 can be fixed outside the room 302, opposite to the entry way 304 to record the entry way 304 and an interior room space viewable through the entry way 304 (e.g., the computer 322 can be directed at an above and down angle, so as to not see too far into the room 302). The computers 332 and 342 can be fixed inside the room 302 to record an interior room space.

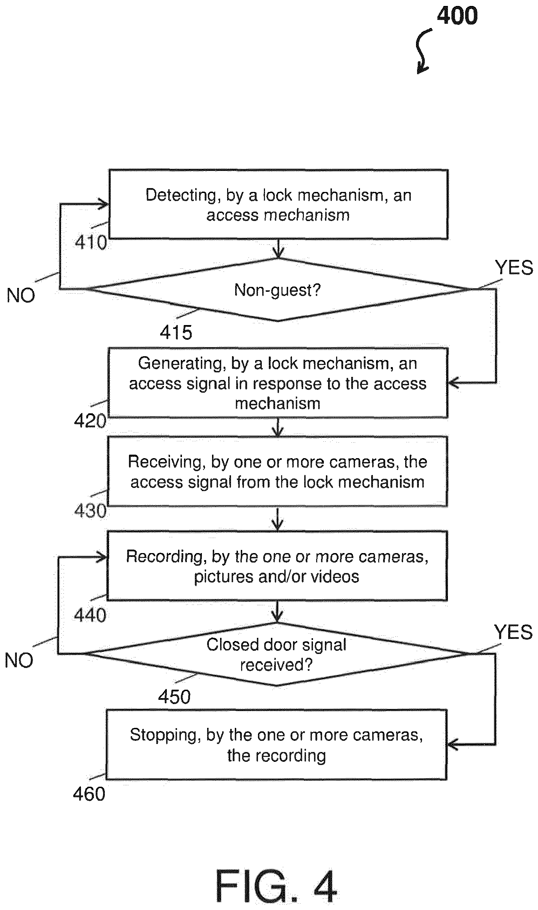

FIG. 4 depicts a process flow 400 of the detection system 300 according to one or more embodiments. The process flow 400 is described with respect to hotel desk example noted herein, but is not limited thereto. Regarding the hotel desk example, one or more users utilize an associated access mechanism (e.g., a mobile device with a key application thereon or an access card) to engage the locking mechanism 311 and one or more computers (312, 322, 332, and 342) for the room 302. That is, each access mechanism is associated and designated for a particular user (registered to the user). However, because the access mechanism can be passed or given to another user, the technical effects and benefits of the detection system 300 is to determine that who is utilizing the detected access mechanism.

The process flow 400 begins at block 410, where the lock mechanism 311 detects an access mechanism. The access mechanism, in this example, is a mobile device with a key application thereon or an access card of a user. The mobile device of the user can be a smartphone, a tablet computer, a laptop computer, a personal digital assistant, etc. Further, at decision block 415, the one or more computers 312, 322, 332, and 342 determine whether the user is a guest or registered guest. If the user is a registered guest, the process flow 400 returns to block 410 (as shown by the NO arrow). In this way, if the room-door is opened by the registered guest, the lock mechanism 311 does not advertise or includes information in an advertisement signal indicating the registered guest. In accordance with one or more embodiments, the lock mechanism 311 does not advertise when room-door fails to open. If the user is not the registered guest, the process flow 400 proceeds to block 420 (as shown by the YES arrow). In this way, if the room-door is opened by a housekeeper of a person other than the registered guest of the room, the room-lock will advertise and communicate to the one or more computers 312, 322, 332, and 342. The technical effects and benefits, thus, include privacy to the registered guest and recording only the events when someone other than the registered guest is in the room 302 (so that the registered guest can know who came/went from the room 302 and see what they did).

At block 420, the lock mechanism 311 generates an access signal in response to the detection of the access mechanism. The access signal indicates that the user is entering the room 302 via the entry way 304. In accordance with one or more embodiments, the access signal from the lock mechanism 311 to the one or more computers 312, 322, 332, and 342 can carry information as to who just entered based on the access rights encoded on or with the use of the access mechanism.

At block 430, the one or more computers 312, 322, 332, and 342 receive the access signal from the lock mechanism 311. The receipt of the access signal by the lock mechanism 311 is a triggering event that causes the one or more computers 312, 322, 332, and 342 to power on (triggered by the open door 306). The access signal can also include data that describes an interaction at the lock mechanism 311.

At block 440, the one or more computers 312, 322, 332, and 342 automatically capture at least one picture and/or video with respect to their field of view. The automatic captures can include recording a picture or video of the predefined area for a time period or while the entry way 104 is in an open state defined by a time period between receiving the access signal and the closed signal.

The process flow 400 then proceeds to decision block 450. At decision block 450, the one or more computers 312, 322, 332, and 342 determine whether a closed signal has been received. If the closed signal has not been received, the process flow 400 returns to block 440 (as shown by the NO arrow) where there the one or more computers 312, 322, 332, and 342 continue to capture at least one picture and/or video. If the closed signal has been received, the process flow 400 proceeds to block 460 (as shown by the YES arrow). For example, the one or more computers 312, 322, 332, and 342 execute video recording after being powered on and triggered by the access signal by the lock mechanism 311 and until till that user exits from the room 304, as indicated by the closed signal. In accordance with one or more embodiments, the detection system 300 can utilize a motion sensor (a dedicated sensor or by image processing of the video frames to determine that something is changing in the room that indicates movement) where a video is captured as long as there is motion.

At block 460, the one or more computers 312, 322, 332, and 342 store their respective recordings. Registered guests can view the recordings from their devices and/or a room display panel installed in the room 102 while they have their room reservation. This viewing can be executed by viewing the recordings directly from the one or more computers 312, 322, 332, and 342 to their devices. Further, a front desk can also have access to the recordings.

In accordance with one or more embodiments, the recording can be stopped and stored on a central server of the detection system. In this regard, computers/cameras can stop recording, advertise/communicate to nearest wireless application protocol (WAP) module in a hallway, and send the recording to the WAP module, which updates to central server. Further, any system applications connected to the central server can access these videos based on proper authorization and need. Further, the cameras could have Wi-Fi or some other means to communicate out to a network. The network could be configured to reach a central service. The central service could then store the recording.

In view of the above, the technical effects and benefits of the detection system described herein include a fully secured room access system that images authorized personnel via a camera as they access a room. This imaging further enhances the detection system by recording videos to assist with tracking abnormal events and stolen items, allow real-time (live) or recorded video watching.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present disclosure without departing from the scope of the present invention. Therefore, it is intended that the present invention not be limited to the particular embodiment disclosed but that the present invention will include all embodiments falling within the scope of the claims.

## Claims

1. A computer-implemented method for detecting a user accessing a room by one or more cameras communicatively coupled to a lock mechanism of an entry way of a room, the computer-implemented method comprising:
receiving, by a first camera of the one or more cameras, an access signal from the lock mechanism, the access signal indicating that the user is entering the room via the entry way; and
automatically capturing, by the first camera, at least one image of a predefined area corresponding to the entry way of the room.

2. A detection system comprising one or more cameras communicatively coupled to a lock mechanism of an entry way of a room, a first camera of the one or more cameras comprises a memory and a processor, the memory storing processor executable code executable by the processor to cause:
receiving, by the first camera, an access signal from the lock mechanism, the access signal indicating that the user is entering the room via the entry way; and
automatically capturing, by the first camera, at least one image of a predefined area corresponding to the entry way of the room.

3. The computer implemented method or the detection system of claim 1 or 2, wherein the lock mechanism generates the access signal in response to detecting a mobile device with a key application thereon or an access card.

4. The computer implemented method or the detection system of claim 3, wherein the mobile device with the key application thereon or the access card is registered to the user, and wherein the user is a person other than a registered guest of the room.

5. The computer implemented method or the detection system of any preceding claim, wherein the first camera is fixed inside the room, opposite to the entry way to orient the entry way and a space viewable through the entry way within a field of view of the first camera.

6. The computer implemented method or the detection system of any preceding claim, wherein the first camera comprises a battery that provides power to the first camera, and
wherein the first camera operates in a low power mode until the access signal is received.

7. The computer implemented method or the detection system of any preceding claim, wherein the first camera activates in response to the access signal and remains active until a closed signal is received from the lock mechanism by the first camera.

8. The computer implemented method or the detection system of claim 7, wherein the automatic capture of the at least one image comprises recording a video of the predefined area while the entry way is in an open state defined by a time period between receiving the access signal and the closed signal.

9. The computer implemented method or the detection system of any preceding claim, wherein the automatic capture of the at least one image comprises recording a video of the predefined area for a time period.

10. The computer implemented method or the detection system of any preceding claim, wherein the processor executable code is executable by the processor to cause the first camera to obfuscate portions of the at least one image external to the entry way and present portions of the at least one image within the entry way.

11. The computer implemented method or the detection system of any preceding claim, wherein the memory stores the at least one image, and
wherein the at least one image is accessible by a mobile device of a second user during a time period.
